(19) Europäisches Patentamt / European Patent Office / Office européen des brevets

(11) **EP 3 045 770 A1**

(12) **EUROPEAN PATENT APPLICATION**
published in accordance with Art. 153(4) EPC

(43) Date of publication:
**20.07.2016 Bulletin 2016/29**

(51) Int Cl.:
**F16G 1/00** (2006.01)   **B29D 29/00** (2006.01)
**F16G 1/08** (2006.01)

(21) Application number: **14847361.4**

(86) International application number:
**PCT/JP2014/004124**

(22) Date of filing: **07.08.2014**

(87) International publication number:
**WO 2015/045256 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2013   JP 2013202947**

(71) Applicant: **Bando Chemical Industries, Ltd.**
**Kobe-shi, Hyogo 650-0047 (JP)**

(72) Inventors:
• **NONAKA, Keizo**
  **Kobe-shi**
  **Hyogo 650-0047 (JP)**
• **TAKANO, Yasuhiro**
  **Kobe-shi**
  **Hyogo 650-0047 (JP)**

(74) Representative: **Agasse, Stéphane et al**
**Cabinet GERMAIN & MAUREAU**
**B.P. 6153**
**69466 Lyon Cedex 06 (FR)**

(54) **FLAT BELT AND PRODUCTION METHOD THEREFOR**

(57)     A portion (11) of a flat belt B which serves as a belt inner peripheral surface is made of a rubber composition. The rubber composition contains nanofibers (16) of an organic fiber having a fiber diameter of 300 to 1000 nm.

FIG. 1

# EP 3 045 770 A1

## Description

TECHNICAL FIELD

The present invention relates to a flat belt and a method for manufacturing the flat belt.

BACKGROUND ART

Applying a composite material in which nanofibers are dispersed in elastomer, to parts of an automobile and electric and electronic components has been considered.

For example, Patent Document 1 discloses a molded product made of a fiber-reinforced elastomer, in which composite short fibers having a sea-island structure are added to a matrix of ethylene-$\alpha$-olefin elastomer, and the sea component is melted to disperse nanofibers, which are island components having a fiber diameter of 10 to 5000 nm, in the matrix of ethylene-$\alpha$-olefin elastomer.

Patent Document 2 discloses a fiber-reinforced elastic body used as a belt for automobiles and for industrial use, such as a toothed belt and a flat belt. The fiber-reinforced elastic body is obtained by kneading a fiber-reinforced thermoplastic resin composition, in which nanofibers having a fiber diameter of 1 $\mu$m or less and an aspect ratio of 2 to 1000 are dispersed in a matrix comprised of polyolefin, a first elastomer and silica, and a second elastomer.

CITATION LIST

PATENT DOCUMENT

Patent Document 1: Japanese Unexamined Patent Publication No. 2012-207220
Patent Document 2: Japanese Unexamined Patent Publication No. 2012-77223

SUMMARY OF THE INVENTION

A flat belt of the present invention is configured such that a portion serving as a belt inner peripheral surface is made of a rubber composition, and the rubber composition contains nanofibers of an organic fiber having a fiber diameter of 300 to 1000 nm.

A method of manufacturing a flat belt of the present invention includes a rubber composition formation step of forming an uncrosslinked rubber composition used to form the portion serving as the belt inner peripheral surface, by kneading a rubber component and a composite material which has a sea-island structure comprised of a sea of a thermoplastic resin and a large number of islands which are a bundle of nanofibers of an organic fiber having a fiber diameter of 300 to 1000 nm, at a temperature higher or equal to a melting point or a softening temperature of the thermoplastic resin of the composite material.

BRIEF DESCRIPTION OF THE DRAWINGS

[FIG. 1] FIG. 1 is an oblique view illustrating part of a flat belt that is cut out from a flat belt of an embodiment.
[FIG. 2] FIG. 2 is a drawing for explaining a method for measuring an apparent friction coefficient of a belt inner peripheral surface of the flat belt of the embodiment.
[FIG. 3] FIG. 3 shows an example layout of pulleys in a belt transmission system using the flat belt of the embodiment.
[FIG. 4] FIG. 4 is an oblique view of a composite material.
[FIG. 5] FIGS. 5A to 5C are first drawings showing a method of manufacturing the flat belt of the embodiment.
[FIG. 6] FIG. 6 is a second drawing showing a method of manufacturing the flat belt of the embodiment.
[FIG. 7] FIG. 7 is a third drawing showing a method of manufacturing the flat belt of the embodiment.
[FIG. 8] FIG. 8 is an oblique view illustrating part of a flat belt that is cut out from a flat belt of a variation of the embodiment.
[FIG. 9] FIGS. 9A to 9C are oblique views each illustrating part of a flat belt that is cut out from a flat belt of another variation of the embodiment.
[FIG. 10] FIGS. 10A to 10C are oblique views each illustrating part of a flat belt that is cut out from a flat belt of still another variation of the embodiment.

[FIG. 11] FIGS. 11A and 11B are oblique views each illustrating part of a flat belt that is cut from a flat belt of a variation of the flat belt of the embodiment, which has a reinforcing fabric.

[FIG. 12] FIG. 12A is a graph showing a relationship between a volume fraction of fibers and rubber hardness. FIG. 12B is a graph showing a relationship between a volume fraction of fibers and tensile stress ($M_{10}$) at 10% stretching in the grain direction. FIG. 12C is a graph showing a relationship between a volume fraction of fibers and a storage elastic modulus (E') in the grain direction.

[FIG. 13] FIG. 13A is a graph showing a relationship between a volume fraction of fibers and a friction coefficient. FIG. 13B is a graph showing a relationship between rubber hardness and a friction coefficient. FIG. 13C is a graph showing a relationship between a storage elastic modulus (E') in the grain direction and a friction coefficient.

[FIG. 14] FIG. 14A is a graph showing a relationship between a volume fraction of fibers and the number of bends of the belt until it breaks in a flex-fatigue resistance evaluation test. FIG. 14B is a graph showing a relationship between rubber hardness and the number of bends of the belt until it breaks in a flex-fatigue resistance evaluation test.

[FIG. 15] FIG. 15 shows a layout of pulleys of a belt running tester.

DESCRIPTION OF EMBODIMENTS

An embodiments will be described in detail below, based on the drawings.

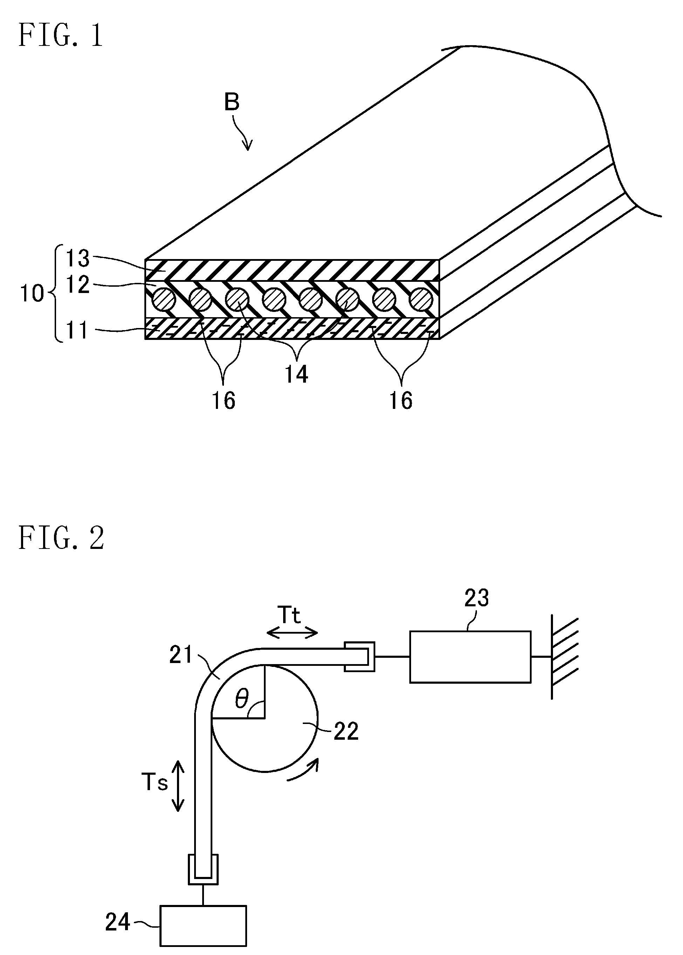

FIG. 1 illustrates a flat belt B of the embodiment. The flat belt B of this embodiment is used under relatively high load conditions requiring long life of the belt, for example, for drive transmission of blowers, compressors, generators or other devices, or for driving accessories of an automobile. The flat belt B of this embodiment has a length of 600 to 3000 mm, a width of 10 to 20 mm, and a thickness of 2 to 3.5 mm, for example.

The flat belt B has a flat belt body 10 including an inner rubber layer 11 on the belt inner periphery, a cord retaining layer 12 on the belt outer periphery of the inner rubber layer 11, and an outer rubber layer 13 on the belt outer periphery of the cord retaining layer 12, which are layered one another and combined together. The inner peripheral surface of the inner rubber layer 11 serves as a belt inner peripheral surface, and the outer surface of the outer rubber layer 13 serves as a belt outer peripheral surface. Further, a cord 14 is buried in the cord retaining layer 12 at a middle portion in the belt thickness direction, and arranged helically at a certain pitch in the belt width direction.

The inner rubber layer 11 of the flat belt B of the embodiment is made of a rubber composition mixed with nanofibers 16, which are organic fibers (hereinafter simply referred to as a "nanofiber 16"). More specifically, the inner rubber layer 11 is made of a rubber composition produced by heating and pressing an uncrosslinked rubber composition prepared by kneading a rubber component mixed with various rubber compounding ingredients, such as the nanofibers 16, and crosslinking the kneaded product by a crosslinker. The thickness of the inner rubber layer 11 is preferably 0.3 mm or more, more preferably 0.5 mm or more, and preferably 3.0 mm or less, more preferably 2.5 mm or less.

Examples of the rubber component of the rubber composition forming the inner rubber layer 11 include ethylene-$\alpha$-olefin elastomer, chloroprene rubber (CR), chlorosulfonated polyethylene rubber (CSM), hydrogenated acrylonitrile-butadiene rubber (H-NBR), natural rubber (NR), styrene-butadiene rubber (SBR), butadiene rubber (BR), nitrile-butadiene rubber (NBR), etc. Among these rubber components, ethylene-$\alpha$-olefin elastomer is preferred in terms of resistance to heat and cold.

Examples of an $\alpha$-olefin component of the ethylene-$\alpha$-olefin elastomer include propylene, pentene, octene, etc. Examples of a diene component include unconjugated dienes, such as 1,4-hexadiene, dicyclopentadiene, ethylidene norbornene, etc. Concrete examples of the ethylene-$\alpha$-olefin elastomer include EPDM, EPR, and so on.

The rubber component of the rubber composition forming the inner rubber layer 11 may be made of only a single species, or may be made of a mixture of a plurality of species of rubber. In the case of using a mixed rubber containing ethylene-$\alpha$-olefin elastomer as a main component, the other rubber species are contained preferably at a ratio of 25% by mass or less so as not to deteriorate the characteristics of the ethylene-$\alpha$-olefin elastomer.

The nanofibers 16 contained in the rubber composition forming the inner rubber layer 11 may not be oriented or may be oriented in a specific direction. However, it is preferred that the nanofibers 16 are oriented in a belt width direction or a belt thickness direction, preferably in the belt width direction in terms of improving the flex-fatigue resistance of the belt by lowering the degree of elasticity in the belt length direction, compared to the degree of elasticity in the belt width direction.

The nanofibers 16 have a fiber diameter of 300 to 1000 nm, but preferably 400 nm or more and preferably 900 nm or less. The fiber length of the nanofibers 16 is preferably 0.3 mm or more, more preferably 0.5 mm or more, and preferably 5 mm or less, more preferably 4 mm or less, and still more preferably 2 mm or less. A ratio (i.e., an aspect ratio) of the fiber length to the fiber diameter of the nanofibers 16 is preferably 500 or more, more preferably 1000 or more, and preferably 10000 or less, more preferably 7000 or less, and still more preferably 3000 or less. The fiber diameter and fiber length of the nanofibers 16 can be measured by observation with an electron microscope, such as an SEM.

Examples of the nanofibers 16 include nanofibers of polyethylene terephthalate (PET) fibers, 6-nylon fibers,

3

6,6-nylon fibers, etc. Among these nanofibers, it is preferred that the rubber composition contains nanofibers of polyethylene terephthalate (PET) fibers. The nanofibers 16 may be comprised of only a single species, or may be comprised of a plurality of species.

The content of the nanofibers 16 in the rubber composition forming the inner rubber layer 11 is preferably 1 part by mass or more, more preferably 2 parts by mass or more, in terms of advantageously increasing, by the nanofibers 16, a degree of elasticity of the belt in the belt width direction, and is preferably 20 parts by mass or less, more preferably 15 parts by mass or less, and still more preferably 10 parts by mass or less, in terms of achieving satisfactory workability of the belt, with respect to 100 parts by mass of the rubber component.

The volume fraction of the nanofibers 16 in the rubber composition forming the inner rubber layer 11 is preferably 1% by volume or more, more preferably 2% by volume or more, in terms of advantageously increasing, by the nanofibers 16, a degree of elasticity of the belt in the belt width direction, and preferably 15% by volume or less, more preferably 13% by volume or less, and still more preferably 8% by volume or less, in terms of achieving satisfactory workability of the belt.

In general, flat belts used for high load transmission are subjected to a high tensile force. In order to be resistant to the high tensile force and reduce compression deformation of the rubber, the degree of elasticity (i.e., the rubber hardness) of the rubber layer on the inner periphery needs to be rather high.

However, a problem is that a friction coefficient of the inner peripheral surface of the belt decreases if short fibers are mixed or a large amount of carbon black as a reinforcing agent is mixed to increase the degree of elasticity of the rubber layer on the inner periphery.

If the rubber layer on the inner periphery is made of ethylene-$\alpha$-olefin elastomer or hydrogenated acrylonitrile-butadiene rubber that is reinforced by a metal salt of $\alpha,\beta$-unsaturated organic acid mixed therein, its transmission properties are superior at the beginning of the belt running, but the friction coefficient of the belt inner peripheral surface significantly decreases if the belt runs for a long period of time.

However, the flat belt B of the present embodiment can reduce a decrease of the friction coefficient of the belt inner peripheral surface, while increasing the degree of elasticity of the inner rubber layer 11, since the inner rubber layer 11 of the flat belt B which serves as the belt inner peripheral surface is made of a rubber composition containing the nanofibers 16, which, even if only a small amount thereof is mixed, significantly increase a degree of elasticity of the rubber composition.

Other examples of the rubber compounding ingredient include a reinforcing agent, a plasticizer, process oil, a processing aid, a vulcanization accelerator, a vulcanization accelerator aid, an antioxidant, a crosslinker, etc.

Examples of the reinforcing agent include carbon black and silica. Examples of the carbon black include furnace black such as SAF, ISAF, N-339, HAF, N-351, MAF, FEF, SRF, GPF, ECF and N-234, and thermal black such as FT and MT. The reinforcing agent may be comprised of only a single species, or may be comprised of a plurality of species. The content of the reinforcing agent is preferably 30 to 80 parts by mass, more preferably 40 to 70 parts by mass, and still more preferably 60 to 70 parts by mass, relative to 100 parts by mass of the rubber component.

Examples of the plasticizer include dialkyl phthalate such as dibutylphthalate (DBP) and dioctyl phthalate (DOP), dialkyl adipate such as dioctyl adipate (DOA), dialkyl sebacate such as dioctyl sebacate (DOS), etc. The plasticizer may be comprised of only a single species, or may be comprised of a plurality of species. The content of the plasticizer is preferably 0.1 to 40 parts by mass, and more preferably 0.1 to 20 parts by mass, relative to 100 parts by mass of the rubber component.

Examples of the process oil include paraffinic oil, naphthenic oil, aromatic oil, etc. The process oil may be comprised of only a single species, or may be comprised of a plurality of species. The content of the process oil is preferably 0.1 to 40 parts by mass, and more preferably 0.1 to 20 parts by mass, relative to 100 parts by mass of the rubber component. Note that "SUNPAR 2280" produced by Japan Sun Oil Company, Ltd. is known as commercially available process oil with a reduced volatile loss and superior heat resistance properties.

Example of the processing aid include stearic acid, polyethylene wax, a metal salt of fatty acid, etc. The processing aid may be comprised of only a single species, or may be comprised of a plurality of species. The content of the processing aid is, for example, 0.1 to 3 parts by mass, relative to 100 parts by mass of the rubber component.

Example of the vulcanization accelerator include thiuram-based (e.g., TET), dithiocarbamate-based (e.g., EZ), and sulfenamide-based (e.g., MSA) accelerators. The vulcanization accelerator may be comprised of only a single species, or may be comprised of a plurality of species. The content of the vulcanization accelerator is, for example, 2 to 10 parts by mass, relative to 100 parts by mass of the rubber component.

Examples of the vulcanization accelerator aid include a metal oxide such as a magnesium oxide and a zinc oxide (zinc flower), a metal carbonate, a fatty acid such as a stearic acid, and the derivatives thereof. The vulcanization accelerator aid may be comprised of only a single species, or may be comprised of a plurality of species. The content of the vulcanization accelerator aid is, for example, 0.5 to 8 parts by mass, relative to 100 parts by mass of the rubber component.

Examples of the antioxidant include a diamine-based antioxidant, a phenol-based antioxidant, etc. The antioxidant may be comprised of only a single species, or may be comprised of a plurality of species. The content of the antioxidant is preferably 0.1 to 5 parts by mass, and more preferably 0.5 to 3 parts by mass, relative to 100 parts by mass of the rubber component.

Examples of the crosslinker include an organic peroxide and sulfur. The organic peroxide is preferred as the crosslinker in terms of increasing the heat resistance. Examples of the organic peroxide include dialkyl peroxides such as a dicumyl peroxide, peroxy esters such as a t-butylperoxy acetate, ketone peroxides such as a dicyclohexanone peroxide, etc. The organic peroxide may be comprised of only a single species, or may be comprised of a plurality of species. The content of the organic peroxide is preferably 0.5 to 10 parts by mass, and more preferably 1 to 6 parts by mass, relative to 100 parts by mass of the rubber component.

If the crosslinker is an organic peroxide, a co-crosslinker may also be contained. Examples of such a co-crosslinker include trimethylolpropane trimethacrylate, ethylene glycol dimethacrylate, triallyl isocyanurate, liquid polybutadiene, N,N'-m-phenylenebismaleimide, etc. However, it is preferred that the rubber composition forming the inner rubber layer 11 does not contain a metal salt of $\alpha,\beta$-unsaturated organic acid, such as zinc acrylate and zinc methacrylate, even as a co-crosslinker. More specifically, it is preferred that the rubber composition forming the inner rubber layer 11 is not made of an ethylene-$\alpha$-olefin elastomer or hydrogenated acrylonitrile-butadiene rubber which is reinforced by a metal salt of the $\alpha,\beta$-unsaturated organic acid mixed therein. Examples of the metal salt of the $\alpha,\beta$-unsaturated organic acid include zinc acrylate, zinc methacrylate, etc. The co-crosslinker may be comprised of only a single species, or may be comprised of a plurality of species. The content of the co-crosslinker is preferably 0.5 to 10 parts by mass, and more preferably 2 to 7 parts by mass, relative to 100 parts by mass of the rubber component.

The rubber composition forming the inner rubber layer 11 includes a thermoplastic resin, which is a composite material that will be described later. The content of the thermoplastic resin is, for example, 1 to 7 parts by mass, relative to 100 parts by mass of the rubber component.

It is preferred that the rubber composition forming the inner rubber layer 11 does not contain organic short fibers with the fiber diameter of 10 $\mu$m or more, in terms of preventing a reduction of the friction coefficient of the belt inner peripheral surface. However, the rubber composition forming the inner rubber layer 11 may contain such organic short fibers within a range which does not lessen the effect of the nanofibers 16 preventing a reduction in the friction coefficient of the belt inner peripheral surface. In such a case, it is preferred that the organic short fibers are contained in the inner rubber layer 11 so as to be oriented in the belt width direction. Examples of such organic short fibers include para-aramid fibers, cellulose-based fibers such as cotton, polyester fibers, etc. The organic short fibers may be comprised of a single species, or may be comprised of a plurality of species. The length of the organic short fibers is, for example, 1 to 6 mm. The amount of the organic short fiber is, for example, 1 to 10 parts by mass relative to 100 parts by mass of the rubber component.

The rubber composition forming the inner rubber layer 11 may also contain a filler, such as calcium carbonate, talc and diatomaceous earth, a stabilizer, a colourant, etc.

The hardness of the rubber in the rubber composition forming the inner rubber layer 11 which is measured by a type A durometer based on Japanese Industrial Standards (JIS) K6253 is preferably 79° or more, more preferably 82° or more, and preferably 95° or less, more preferably 92° or less.

As described earlier, it is preferred that the nanofibers 16 are contained in the rubber composition forming the inner rubber layer 11 so as to be oriented in the belt width direction. In that case, it is preferred that the rubber composition forming the inner rubber layer 11 has the following tension properties and viscoelastic properties in each of a grain direction which corresponds to the belt width direction along which the nanofiber 16 is oriented, and a cross-grain direction which corresponds to the belt length direction.

The tensile stress ($M_{10}$) of the rubber composition forming the inner rubber layer 11 which is measured, based on JIS K6251, when it is stretched by 10% in the grain direction is preferably 1.0 MPa or more, more preferably 1.5 MPa or more, and preferably 20 MPa or less, more preferably 18 MPa or less.

The tensile stress ($M_{50}$) of the rubber composition forming the inner rubber layer 11 which is measured, based on JIS K6251, when it is stretched by 50% in the grain direction is preferably 2.0 MPa or more, more preferably 30 MPa or more, and preferably 20 MPa or less, more preferably 18 MPa or less.

The tensile strength ($T_B$), in the grain direction, of the rubber composition forming the inner rubber layer 11 which is measured based on JIS K6251 is preferably 8 MPa or more, more preferably 10 MPa or more, and preferably 30 MPa or less, more preferably 28 MPa or less.

The elongation at breakage ($E_B$), in the grain direction, of the rubber composition forming the inner rubber layer 11 which is measured based on JIS K6251 is preferably 130% or more, more preferably 150% or more, and preferably 400% or less, more preferably 380% or less.

The tensile stress ($M_{10}$) of the rubber composition forming the inner rubber layer 11 which is measured, based on JIS K6251, when it is stretched by 10% in the cross-grain direction is preferably 0.3 MPa or more, more preferably 0.5 MPa or more, and preferably 5 MPa or less, more preferably 3 MPa or less.

The tensile stress ($M_{50}$) of the rubber composition forming the inner rubber layer 11 which is measured, based on JIS K6251, when it is stretched by 50% in the cross-grain direction is preferably 1 MPa or more, more preferably 1.5 MPa or more, and preferably 10 MPa or less, more preferably 8 MPa or less.

The tensile stress ($M_{100}$) of the rubber composition forming the inner rubber layer 11 which is measured, based on JIS K6251, when it is stretched by 100% in the cross-grain direction is preferably 1 MPa or more, more preferably 3 MPa or more, and preferably 20 MPa or less, more preferably 18 MPa or less.

The tensile strength ($T_B$), in the cross-grain direction, of the rubber composition forming the inner rubber layer 11 which is measured based on JIS K6251 is preferably 5 MPa or more, more preferably 8 MPa or more, and preferably 25 MPa or less, more preferably 23 MPa or less.

The elongation at breakage ($E_B$), in the cross-grain direction, of the rubber composition forming the inner rubber layer 11 which is measured based on JIS K6251 is preferably 150% or more, more preferably 170% or more, and preferably 400% or less, more preferably 380% or less.

A ratio of the tensile stress ($M_{10}$) of the rubber composition forming the inner rubber layer 11 when it is stretched by 10% in the grain direction to the tensile stress ($M_{10}$) of the same rubber composition when it is stretched by 10% in the cross-grain direction is preferably 1 or more, more preferably 1.5 or more, and preferably 20 or less, more preferably 18 or less.

A ratio of the tensile stress ($M_{50}$) of the rubber composition forming the inner rubber layer 11 when it is stretched by 50% in the grain direction to the tensile stress ($M_{50}$) of the same rubber composition when it is stretched by 50% in the cross-grain direction is preferably 1.5 or more, more preferably 2.0 or more, and preferably 20 or less, more preferably 18 or less.

A storage elastic modulus (E'), in the grain direction, of the rubber composition forming the inner rubber layer 11 which is measured based on JIS K6394 is preferably 20 MPa or more, more preferably 30 MPa or more, and preferably 200 MPa or less, more preferably 180 MPa or less. The storage elastic modulus (E') in the grain direction is measured by a pulling method under conditions of a mean strain which is a strain under a load 1.3 times greater than a load at a strain of 1%, a strain amplitude of 0.1%, a frequency of 10 Hz, and a test temperature of 100°C.

A loss factor (tan$\delta$), in the grain direction, of the rubber composition forming the inner rubber layer 11 which is measured based on JIS K6394 is preferably 0.01 or more, more preferably 0.03 or more, and preferably 0.20 or less, more preferably 0.18 or less. This loss factor (tan$\delta$) in the grain direction, too, is measured by a pulling method under the conditions of a mean strain which is a strain under a load 1.3 times greater than a load at a strain of 1%, a strain amplitude of 0.1%, a frequency of 10 Hz, and a test temperature of 100°C.

A storage elastic modulus (E'), in the cross-grain direction, of the rubber composition forming the inner rubber layer 11 which is measured based on JIS K6394 is preferably 5 MPa or more, more preferably 7 MPa or more, and preferably 40 MPa or less, more preferably 35 MPa or less. This storage elastic modulus (E') in the cross-grain direction is measured by a pulling method under conditions of a mean strain of 5%, a strain amplitude of 1%, a frequency of 10 Hz, and a test temperature of 100°C.

A loss factor (tan$\delta$), in the cross-grain direction, of the rubber composition forming the inner rubber layer 11 which is measured based on JIS K6394 is preferably 0.08 or more, more preferably 0.1 or more, and preferably 0.30 or less, more preferably 0.28 or less. This loss factor (tan$\delta$) in the cross-grain direction, too, is measured by a pulling method under conditions of a mean strain of 5%, a strain amplitude of 1%, a frequency of 10 Hz, and a test temperature of 100°C.

A ratio of the storage elastic modulus (E') of the rubber composition forming the inner rubber layer 11 in the grain direction to the storage elastic modulus (E') of the same rubber composition in the cross-grain direction is preferably 1.5 or more, more preferably 2 or more, and preferably 20 or less, more preferably 18 or less.

The apparent friction coefficient $\mu'$ of the surface of the inner rubber layer 11, i.e., the belt inner peripheral surface, is preferably 0.70 or more, more preferably 0.75 or more, and preferably 2.0 or less, more preferably 1.8 or less, still more preferably 1.2 or less, and much more preferably 0.85 or less. As shown in FIG. 2, the apparent friction coefficient $\mu'$ is obtained in the following manner: a flat belt piece 21 is wrapped, at a wrapping angle $\theta$, around a flat pulley 22 having an outer diameter of 50 to 100 mm such that the belt inner peripheral surface of the inner rubber layer 11 of the flat belt piece 21 is brought into contact with the flat pulley 22; the upper end of the flat belt piece 21 is chucked to connect it to a load cell 23, while the lower end thereof hanging down vertically is chucked to attach a weight 24 thereto; the flat pulley 22 is rotated (counterclockwise in FIG. 2) at a peripheral speed of 20 m/s to increase the tension of the flat belt piece 21 at a portion between the load cell 23 and the flat pulley 22; and loose-side tension Ts applied by the weight 24 and tension-applied-side tension Tt detected by the load cell 23 are used to obtain the apparent friction coefficient $\mu'$ of the belt inner peripheral surface, based on the Euler equation shown below. Note that this method of measuring the apparent friction coefficient $\mu'$ is described on page 122 of Practical Design for Belt Transmission, edited by the Society of Belt Transmission Engineers, published by Yokendo Co. Ltd.

[Equation 1]

$$\mu' = \frac{\ln(T_t / T_s)}{\theta}$$

Each of the cord retaining layer 12 and the outer rubber layer 13 is in the shape of a strip having a horizontally elongated rectangular cross-section, and is made of a rubber composition produced by heating and pressing an uncrosslinked rubber composition prepared by kneading a rubber component mixed with various rubber compounding ingredients, and crosslinking the kneaded product by a crosslinker. The cord retaining layer 12 has a thickness of, e.g., 0.6 to 1.5 mm. The outer rubber layer 13 has a thickness of, e.g., 0.6 to 1.5 mm.

Examples of the rubber components of the rubber compositions forming the cord retaining layer 12 and the outer rubber layer 13 include ethylene-$\alpha$-olefin elastomer (e.g., EPDM and EPR), chloroprene rubber (CR), chlorosulfonated polyethylene rubber (CSM), hydrogenated acrylonitrile-butadiene rubber (H-NBR), etc., similarly to the rubber component forming the inner rubber layer 11. Among these rubber components, ethylene-$\alpha$-olefin elastomer and hydrogenated acrylonitrile-butadiene rubber are preferred, and EPDM is particularly preferred, in terms of heat resistance properties. The rubber component of the rubber composition forming each of the cord retaining layer 12 and the outer rubber layer 13 may be made of a single species, or may be made of a mixture of a plurality of species of rubber. It is preferred that the rubber components of the rubber compositions forming the cord retaining layer 12 and the outer rubber layer 13 are the same, and it is preferred that the rubber components of the cord retaining layer 12 and the outer rubber layer 13 are the same as the rubber component of the rubber composition forming the inner rubber layer 11, as well.

Examples of the compounding ingredients include a reinforcing agent, a plasticizer, process oil, a processing aid, an antioxidant, a crosslinker, a co-crosslinker, a vulcanization accelerator aid, a stabilizer, a colourant, an organic short fiber, etc. Note that the rubber composition forming the cord retaining layer 12 and the outer rubber layer 13 may contain nano fibers.

Examples of the crosslinker used for the rubber composition forming the cord retaining layer 12 and the outer rubber layer 13 include an organic peroxide and sulfur, among which an organic peroxide is preferred in terms of increasing the heat resistance.

In the case of using an organic peroxide as the crosslinker, the rubber composition forming the cord retaining layer 12 and the outer rubber layer 13 may be mixed with a metal salt of $\alpha,\beta$-unsaturated organic acid, such as zinc acrylate and zinc methacrylate, as a co-crosslinker. Thus, the rubber composition forming the cord retaining layer 12 and the outer rubber layer 13 may be ethylene-$\alpha$-olefin elastomer or hydrogenated acrylonitrile-butadiene rubber which is reinforced by being mixed with a metal salt of $\alpha,\beta$-unsaturated organic acid.

When the flat belt B is wrapped around a flat pulley and receives tension, a great pressing force from the cord 15 toward the flat pulley is applied to part of the cord retaining layer 12 closer to the inner rubber layer 11 than the cord 15 is and to the inner rubber layer 11. If the cord retaining layer 12 has a low degree of elasticity, the cord 15 may move toward the flat pulley, which may deform the cord retaining layer 12 significantly and repeatedly, and hence, the cord retaining layer 12 may generate heat, leading to early breakage of the cord retaining layer 12. To avoid this, it is preferred that the rubber composition forming the cord retaining layer 12 contains organic short fibers with the fiber diameter of 10 $\mu$m or more for increased degree of elasticity. In this case, it is preferred that the organic short fibers contained in the cord retaining layer 12 are oriented in the belt width direction. Examples of such organic short fibers include organic short fibers of 6-nylon fibers, 6,6-nylon fibers, polyester fibers, cotton, aramid fibers, etc. The organic short fibers may be made of a single species, or may be made of a plurality of species mixed together. The length of the organic short fibers is, for example, 1 to 6 mm. The amount of the organic short fibers is, for example, 10 to 30 parts by mass relative to 100 parts by mass of the rubber component. Note that the rubber composition forming the outer rubber layer 13 may or may not be mixed with the organic short fibers.

The cord 14 may be buried in a middle portion of the belt in the belt thickness direction, may be buried in a portion closer to the belt inner peripheral surface, or may be buried in a portion closer to the belt outer peripheral surface.

The cord 14 is made of a cord material, such as twisted yarn and braid, which is made, for example, of polyester fibers, such as polyethylene naphthalate (PEN) fibers and polyethylene terephthalate (PET) fibers, aramid fibers, vinylon fibers, glass fibers, carbon fibers, etc. The outer diameter of the cord 14 is, for example, 0.1 to 2.0 mm. To give the cord 14 adhesiveness to the cord retaining layer 11, the cord 14 is subjected to an adhesion treatment in which the cord material is soaked in a resorcinol formaldehyde latex solution (hereinafter referred to as the "RFL solution") and then heated, and/or an adhesion treatment in which the cord material is soaked in rubber cement and then dried, before the cord 14 is formed.

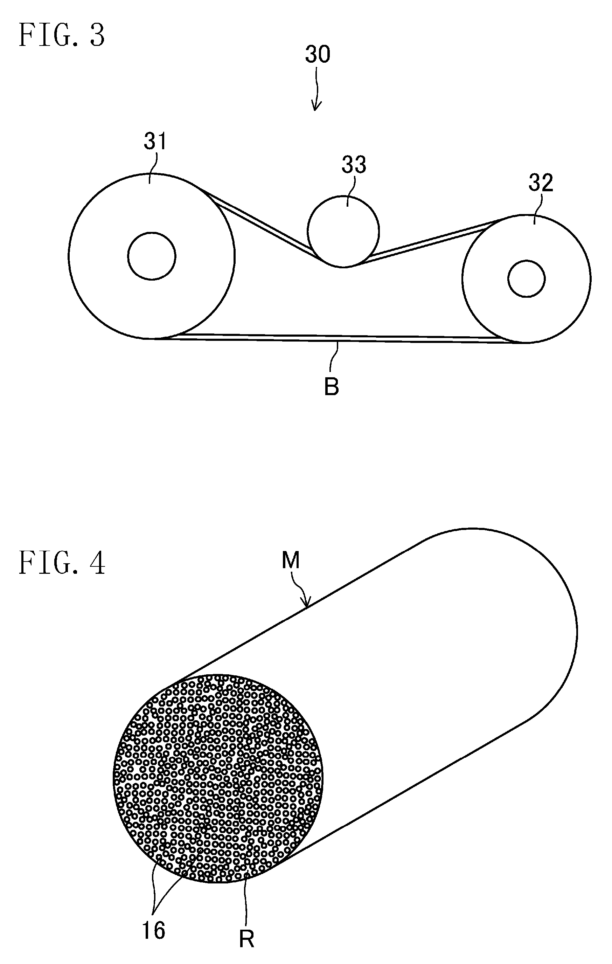

As shown in FIG. 3, the flat belt B of this embodiment having the above configuration is wrapped around a plurality of flat pulleys 31, 32, 33 and comprises a belt transmission system 30. Here, the number of flat pulleys 31, 32, 33 included in the belt transmission system 30 is, for example, three to eight. The outer diameter of each of the flat pulleys 31, 32, 33 is, for example 30 to 500 mm. Further, the plurality of flat pulleys 31, 32, 33 of the belt transmission system 30 may include the flat pulley 33 that is arranged such that the outer peripheral surface of the flat belt B comes in contact with the flat pulley 33.

The inner rubber layer 11 and the cord retaining layer 12 of the flat belt B of the present embodiment are appropriately designed so that the load can be evenly shared by the cord 15, which, as a result, achieves the belt running with high stability even when the belt is used for high load transmission. Further, the initial tension of the flat belt B can be set at a higher value because the friction coefficient of the belt inner peripheral surface can be set at a high value and this high friction coefficient can be maintained even after long-time running of the belt, i.e., the friction coefficient may be prevented from decreasing. This allows the flat belt B to transmit loads with high efficiency, which is one of characteristics of the flat belt B, and hence can achieve a maintenance-free belt transmission system by being combined, for example, with such an anti-snaking system that is disclosed in Japanese Patent No. 3680083.

Now, a method for manufacturing the flat belt B of the present embodiment will be described based on FIGS. 4-7.

-Material Preparation Process-

In a material preparation process, a rubber component and a composite material having a sea-island structure comprised of the sea of a thermoplastic resin and a plurality of islands which are a bundle of the nanofibers 16 with a fiber diameter of 300 to 1000 nm, are kneaded together at a temperature higher than or equal to a melting point or a softening temperature of the thermoplastic resin of the composite material, and thereafter the kneaded product is rolled to obtain an uncrosslinked rubber composition sheet for forming the inner rubber layer 11 which serves as a belt inner peripheral surface (a rubber composition formation step).

Specifically, first, the components other than a crosslinker, a co-crosslinker and the composite material comprised of the thermoplastic resin and the nanofibers 16 are placed in an internal kneader, e.g., a Banbury mixer, to knead the components with predetermined energy. After the kneading, the composite material is added therein for further kneading at a temperature higher than or equal to the melting point or the softening temperature of the thermoplastic resin contained in the composite material. During this further kneading, the thermoplastic resin in the composite material melts or softens and is dispersed in the rubber component, and the bundle of the nanofibers 16 is opened by a shearing force and dispersed in the rubber component. This kneading using the composite material achieves high dispersibility of the nanofibers 16 in the rubber component.

As illustrated in FIG. 4, the composite material M is a conjugate fiber cut into a rod shape. The conjugate fiber is comprised of the nanofibers 16 arranged independently from, and in parallel with, one another, like islands in the sea of a polymer of the thermoplastic resin R.

Examples of the thermoplastic resin R include polyethylene resin, ethylene-vinyl acetate copolymer resin, nylon-based resin, urethane-based resin, etc. It is preferred that the thermoplastic resin R is highly compatible with the rubber component since the thermoplastic resin R is dispersed in the rubber component while the rubber component is kneaded. In view of this, if the rubber component is a low-polarity material, the thermoplastic resin R is preferably polyethylene resin or ethylene-vinyl acetate copolymer resin which is low-polarity resin. Particularly in the case where the rubber component is an ethylene-$\alpha$-olefin elastomer, the thermoplastic resin R is preferably polyethylene resin. Further, if the rubber component is a high-polarity material, such as nitrile-butadiene rubber (NBR), the thermoplastic resin R may be a modified resin obtained by introducing a polar group, such as maleic acid, into polyethylene resin, or nylon-based resin, or urethane-based resin, etc.

The melting point or the softening temperature of the thermoplastic resin R is preferably 70°C or more, more preferably 90°C or more, and preferably 150°C or less, more preferably 140°C or less. If the thermoplastic resin R is a crystalline polymer, the melting point is measured by differential scanning calorimetry (DSC). If the thermoplastic resin R is an amorphous polymer, the softening temperature is a Vicat softening temperature measured based on JIS K7206. For example, the melting point of low-density polyethylene resin (LDPE) is 95 to 130°C. The melting point of high-density polyethylene resin (HDPE) is 120 to 140°C. The melting point of ethylene-vinyl acetate (EVA) copolymer resin is 65 to 90°C. The melting point of ultra-high-molecular-weight polyethylene resin (UHMWPE) is 125 to 135°C.

As already mentioned above, examples of the nanofibers 16 include nanofibers of polyethylene terephthalate (PET) fibers, 6-nylon fibers, 6,6-nylon fibers, etc.

The outer diameter of the composite material M is preferably 10 $\mu$m or more, more preferably 15 $\mu$m or more, and preferably 100 $\mu$m or less, more preferably 80 $\mu$m or less, in terms of achieving satisfactory workability in kneading. The length of the composite material M is preferably 0.5 mm or more in terms of reducing the material cost, and preferably 5 mm or less, more preferably 2 mm or less, in terms of increasing the dispersibility of the nanofibers 16. A ratio (i.e., an aspect ratio) of the length of the composite material M to the outer diameter of itself is preferably 20 or more, more preferably 30 or more, and preferably 700 or less, more preferably 500 or less.

The content of the nanofibers 16 in the composite material M is preferably 30% by mass or more, more preferably 50% by mass or more, and preferably 95% by mass or less, more preferably 90% by mass or less. The number of nanofibers 16 contained in the composite material M is from 100 to 1000.

Next, the kneaded product of the uncrosslinked rubber composition in bulk form is taken out from the internal kneader, and cooled. Thereafter, the kneaded product is placed into a mixer such as open rolls, a kneader, a Banbury mixer, etc., together with a crosslinker, and is kneaded. During this kneading, the crosslinker is dispersed in the rubber component.

Next, the kneaded product of the uncrosslinked rubber composition in bulk form is taken out from the mixer, and thereafter rolled by calender rolls and formed into an uncrosslinked rubber composition sheet for forming a compressed rubber layer 11. The nanofibers 16 contained in the uncrosslinked rubber composition sheet are oriented in the grain direction, i.e., in the direction in which the uncrosslinked rubber composition sheet is pulled out from the calender rolls.

In the material preparation process, uncrosslinked rubber composition sheets for forming the cord retaining layer 12 and the outer rubber layer 13 are also formed in a similar manner. Further, the cord material to serve as the cord 14 is subjected to a predetermined adhesion treatment.

-Molding and Crosslinking Process-

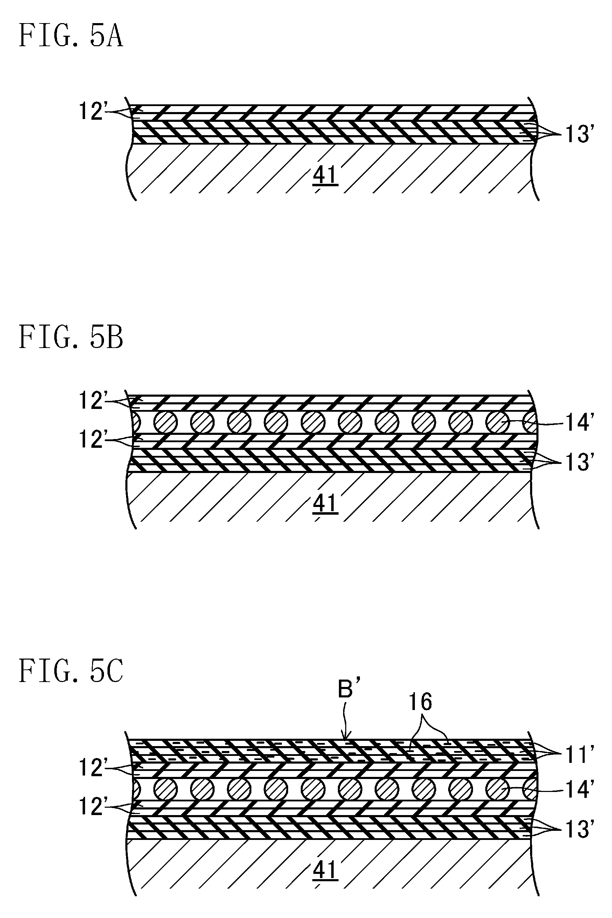

In a molding and crosslinking process, as illustrated in FIG. 5A, an uncrosslinked rubber sheet 13' for the outer rubber layer 13 is wrapped around the outer periphery of a cylindrical mold 41, and thereafter, an uncrosslinked rubber sheet 12' for the cord retaining layer 12 is wrapped around the uncrosslinked rubber sheet 13'. If the uncrosslinked rubber sheet 12' for the cord retaining layer 12 contains organic short fibers oriented in a predetermined direction, the grain direction of the uncrosslinked rubber sheet 12', i.e., the direction in which the organic short fibers are oriented, is aligned with the axial direction of the cylindrical mold 41. Thus, the obtained flat belt B contains, in the cord retaining layer 12, the organic short fibers oriented in the belt width direction.

Next, as illustrated in FIG. 5B, a cord material 14' to be the cord 14 is helically wound around the uncrosslinked rubber sheet 12' for the cord retaining layer 12. After that, another uncrosslinked rubber sheet 12' for the cord retaining layer 12 is wrapped around the cord material 14'.

Next, as illustrated in FIG. 5C, an uncrosslinked rubber sheet 11' for the inner rubber layer 11 is wrapped around the uncrosslinked rubber sheet 12' for the cord retaining layer 12, thereby forming a belt formation body B' on the cylindrical mold 41. The flat belt B to be manufactured will contain, in the inner rubber layer 11, the nanofibers 16 oriented in the belt width direction if the grain direction of the uncrosslinked rubber sheet 11' for the inner rubber layer 11 is aligned with the axial direction of the cylindrical mold 41 in forming the belt formation body B'.

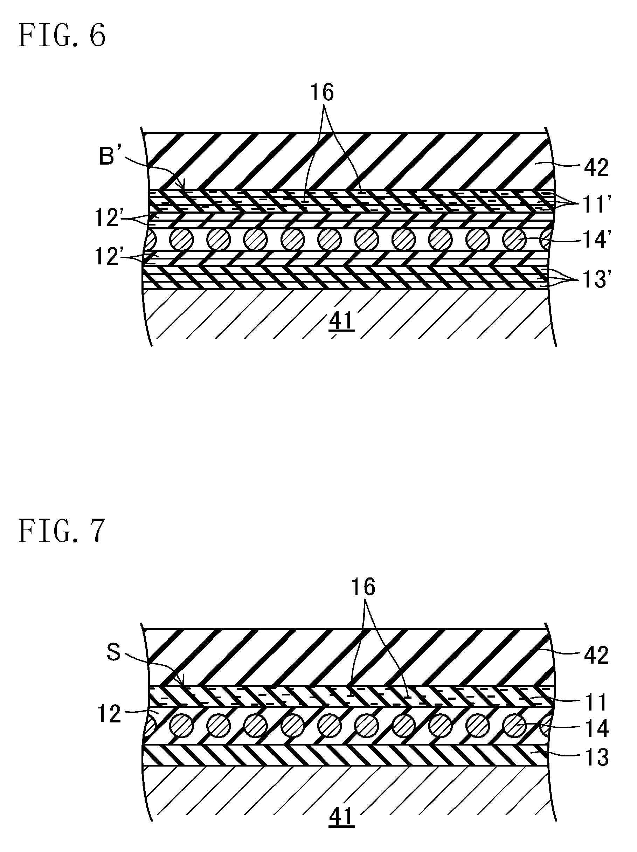

Next, as illustrated in FIG. 6, a rubber sleeve 42 is put on the belt formation body B' formed on the cylindrical mold 41. After that, the cylindrical mold 41 is placed in a vulcanizer, and the vulcanizer is sealed. The cylindrical mold 41 is heated with high-temperature steam, for example, and a high pressure is applied to the cylindrical mold 41 to press the rubber sleeve 42 in a radial direction toward the cylindrical mold 41. At this moment, the uncrosslinked rubber composition of the belt formation body B' flows, and a crosslinking reaction of the rubber component, as well as an adhesion reaction of the cord material 14' with the rubber, are promoted. As a result, a cylindrical belt slab S is formed on the cylindrical mold 41 as illustrated in FIG. 7.

-Grinding and Finishing Process-

In a grinding and finishing process, the cylindrical mold 41 is removed from the vulcanizer, and the cylindrical belt slab S formed on the cylindrical mold 41 is demolded. After that, the inner and outer peripheral surfaces of the belt slab S are ground to make the inner and outer portions have an uniform thickness.

Lastly, the belt slab S is sliced into pieces each having a predetermined width, and each of the pieces is turned inside out to obtain the flat belt B.

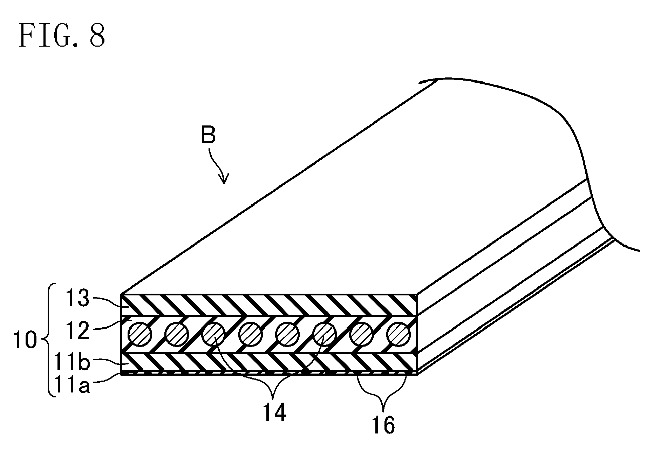

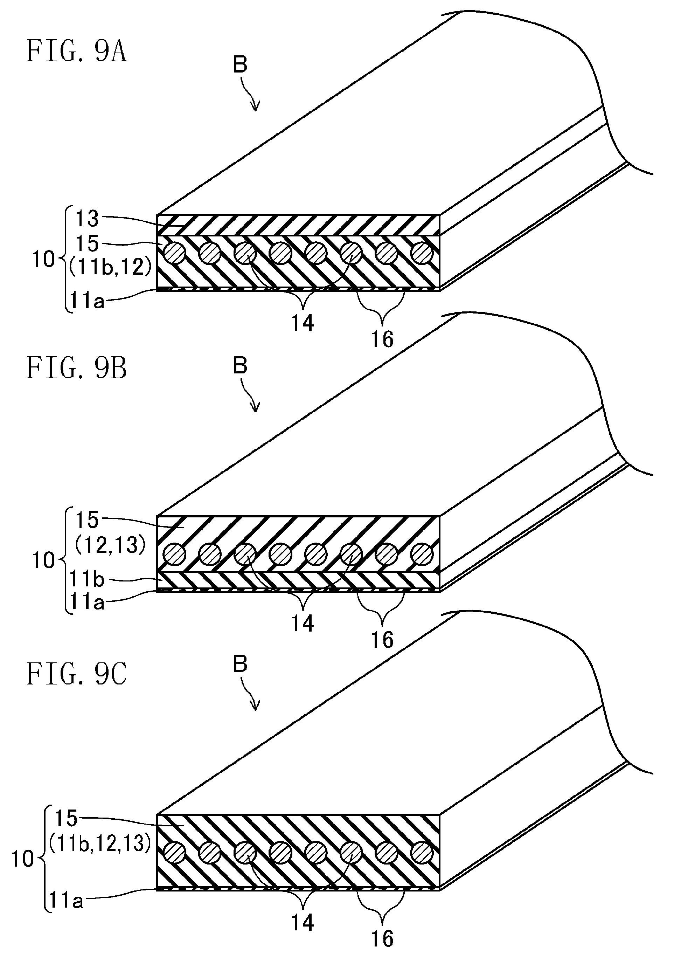

Note that in the above embodiment, the flat belt B has a three-layer structure having the inner rubber layer 11, the cord retaining layer 12 and the outer rubber layer 13, but is not limited thereto. As illustrated in FIG. 8, the flat belt B may be configured such that the flat belt body 10 has a four-layer structure in which the inner rubber layer 11 is comprised of a surface-side inner rubber layer 11a on the surface side and an inside inner rubber layer 11b, and that the surface-side inner rubber layer 11a which serves as the belt inner peripheral surface is made of the rubber composition containing the nanofibers 16. As illustrated in FIG. 9A, the flat belt B may also be configured such that the flat belt body 10 has a three-layer structure in which the inside inner rubber layer 11b and the cord retaining layer 12 are made of the same rubber composition as a single rubber layer 15. Further, as illustrated in FIG. 9B, the flat belt B may be configured such that the flat belt body 10 has three-layer structure in which the cord retaining layer 12 and the outer rubber layer 13 are made of the same rubber composition as a single rubber layer 15. In addition, as illustrated in FIG. 9C, the flat belt B may be configured such that the flat belt body 10 has a two-layer structure in which the inside inner rubber layer 11b, the cord retaining layer 12 and the outer rubber layer 13 are made of the same rubber composition as a single rubber layer 15.

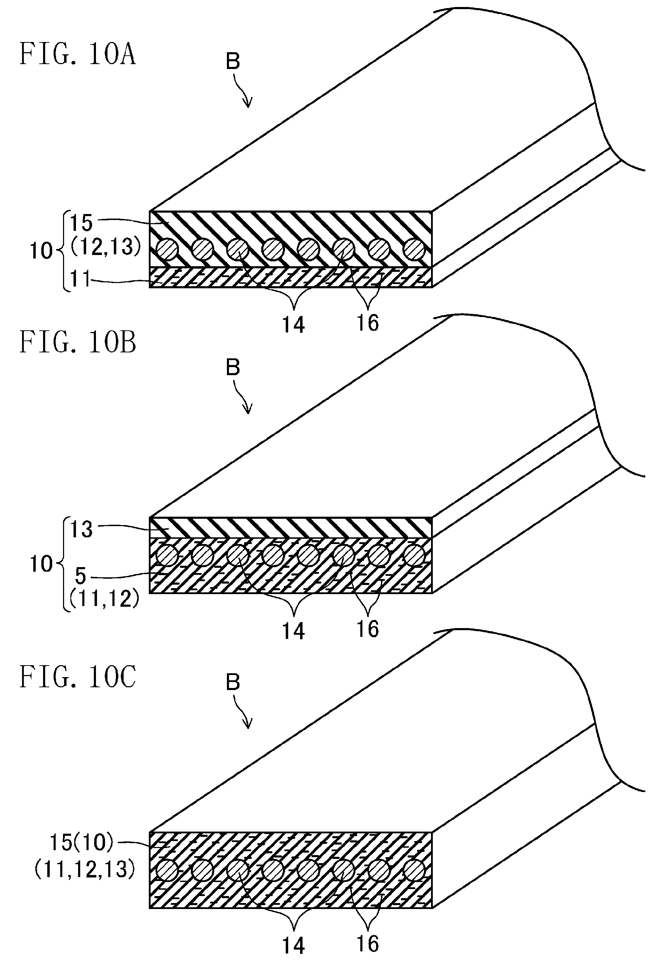

In the above embodiment, the flat belt B is configured such that the flat belt body 10 has a three-layer structure having the inner rubber layer 11, the cord retaining layer 12 and the outer rubber layer 13. However, as illustrated in FIG. 10A, the flat belt B may be configured such that the flat belt body 10 has a two-layer structure in which the cord retaining layer 12 and the outer rubber layer 13 are made of the same rubber composition as a single rubber layer 15. Also, as illustrated in FIG. 10B, the flat belt B may be configured such that the flat belt body 10 has a two-layer structure in which the inner rubber layer 11 and the cord retaining layer 12 are made of the same rubber composition as a single rubber layer 15, and such that the single rubber layer 15 comprised of the inner rubber layer 11 and the cord retaining layer 12 and serving as the belt inner peripheral surface is made of a rubber composition containing the nanofibers 16. Further, as illustrated in FIG. 10C, the flat belt B may be configured such that the flat belt body 10 has a single-layer structure in which the inner rubber layer 11, the cord retaining layer 12 and the outer rubber layer 13 are made of the same rubber composition as a single rubber layer 15, and such that the single rubber layer 15 comprised of the inner rubber layer 11, the cord retaining layer 12 and the outer rubber layer 13 and serving as the belt inner peripheral surface is made of a rubber composition containing the nanofibers 16.

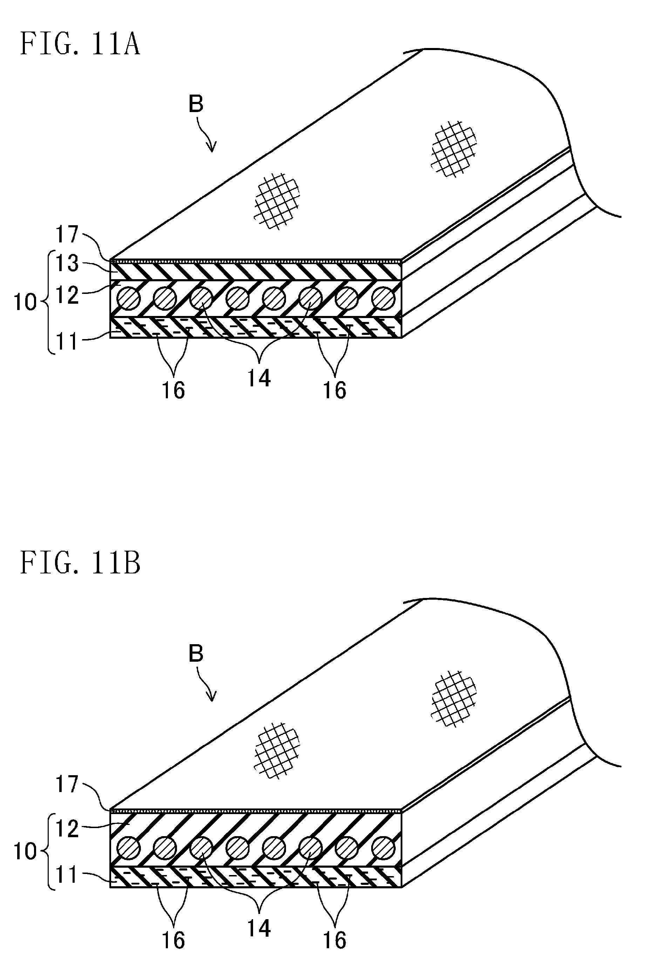

In the above embodiment, the flat belt B includes the outer rubber layer 13 as an outermost layer. However, the flat belt B is not limited to this configuration, and as illustrated in FIG. 11A, the flat belt B may include a reinforcing fabric 17 on the outer side of the outer rubber layer 13. Further, as illustrated in FIG. 11B, the flat belt B may include the reinforcing fabric 17 in place of the outer rubber layer 13. To provide the reinforcing fabric 17, a woven fabric or a knitted fabric subjected to an adhesion treatment using an RFL solution and/or rubber cement may be used in manufacturing the flat belt B.

[Examples]

[First Test Evaluation]

(Rubber Composition)

Rubber compositions of Examples 1 to 6 and Comparative Examples 1 to 3 were prepared. The detailed configurations of the respective rubber compositions will be shown in Table 1, as well.

<Example 1>

EPDM as a rubber component (trade name: Nordel IP 4640 produced by The Dow Chemical Company), and relative to 100 parts by mass of this rubber component, 65 parts by mass of carbon black (trade name: SEAST SO, which is FEF produced by Tokai Carbon Co., Ltd.), 10 parts by mass of process oil (trade name: SUNPAR 2280 produced by Japan Sun Oil Company, Ltd.), 1 part by mass of a stearic acid as a processing aid (trade name: stearic acid 50S produced by New Japan Chemical Co., Ltd.), 5 parts by mass of a zinc oxide as a vulcanization accelerator aid (trade name: zinc oxide type III produced by Sakai Chemical Industry Co., Ltd.), and 2 parts by mass of an antioxidant (trade name: Nocrac MB produced by OUCHI SHINKO CHEMICAL INDUSTRIAL CO., LTD.) were placed in a Banbury mixer for test. These substances were kneaded at 82 rpm of a rotor until the energy reaches 70W·h. After that, 4.3 parts by mass of a composite material A (a composite material of a polyethylene resin - PET nanofiber, produced by Teijin Limited), relative to 100 parts by mass of the rubber component, were placed in the Banbury mixer for test, and all these substances were further kneaded until the temperature reaches 140°C that was higher than the melting point of the polyethylene resin contained in the composite material A.

Then, the kneaded product of the uncrosslinked rubber composition in bulk form was taken out from the Banbury mixer for test, and was cooled on a rubber roll. After that, the kneaded product was placed in the Banbury mixer for test, and was kneaded at 54 rpm of the rotor and plasticized. Then, 3 parts by mass of an organic peroxide as a crosslinker (trade name: PERCUMYL D (dicumyl peroxide) produced by NOF CORPORATION) and 2 parts by mass of ethylene glycol dimethacrylate as a co-crosslinker (trade name: SUN-ESTER EG produced by SANSHIN CHEMICAL INDUSTRY CO.,LTD.), relative to 100 parts by mass of the rubber component, were placed in the Banbury mixer for test, and kneaded until the temperature reached 100°C.

Then, the kneaded product of the uncrosslinked rubber composition in bulk form was taken out from the Banbury mixer for test, and was cooled on the rubber roll. After that, the kneaded product was rolled with calender rolls to obtain an uncrosslinked rubber composition sheet of Example 1 having a thickness of 0.6 to 0.7 mm.

The composite material A has a sea-island structure comprised of the sea of the polyethylene resin, of which the melting point is 130°C, and 700 islands of a bundle of 700 nanofibers of polyethylene terephthalate (PET) fibers, of which the fiber diameter is 840 nm. The content of the polyethylene resin in the composite material A is 30% by mass, and the content of the nanofibers in the composite material A is 70% by mass. The composite material A has an outer diameter of 28 μm, a length of 1 mm, and an aspect ratio of 35.7. Thus, the aspect ratio of the nanofibers contained in the composite material A is 1190. Further, the content of the polyethylene resin and the content of the nanofibers in the rubber composition of Example 1 are 1.3 parts by mass and 3 parts by mass, respectively, relative to 100 parts by mass of the rubber component.

In the rubber composition of Example 1, the volume fraction of the nanofibers is 2.2% by volume.

<Example 2>

An uncrosslinked rubber composition sheet of Example 2 having the same configurations as the uncrosslinked rubber composition sheet of Example 1, except that the amount of the composite material A was set to be 8.6 parts by mass, relative to 100 parts by mass of the rubber component, was prepared.

The content of the polyethylene resin and the content of the nanofibers in the rubber composition of Example 2 are 2.6 parts by mass and 6 parts by mass, respectively, relative to 100 parts by mass of the rubber component.

In the rubber composition of Example 2, the volume fraction of the nanofibers is 2.5% by volume.

<Example 3>

An uncrosslinked rubber composition sheet of Example 3 having the same configurations as the uncrosslinked rubber composition sheet of Example 1, except that the amount of the composite material A was set to be 13.5 parts by mass, relative to 100 parts by mass of the rubber component, was prepared.

The content of the polyethylene resin and the content of the nanofibers in the rubber composition of Example 3 are 4 parts by mass and 9.5 parts by mass, respectively, relative to 100 parts by mass of the rubber component.

In the rubber composition of Example 3, the volume fraction of the nanofibers is 3.9% by volume.

<Example 4>

An uncrosslinked rubber composition sheet of Example 4 having the same configurations as the uncrosslinked rubber composition sheet of Example 1, except that 4.3 parts by mass of a composite material B (a composite material of polyethylene resin - PET nanofibers, produced by Teijin Limited) relative to 100 parts by mass of the rubber component was mixed in place of the composite material A, was prepared.

The composite material B has a sea-island structure comprised of the sea of polyethylene resin, of which the melting point is 130°C, and 700 islands of a bundle of 700 nanofibers of polyethylene terephthalate (PET) fibers, of which the fiber diameter is 400 nm. The content of the polyethylene resin in the composite material B is 30% by mass, and the content of the nanofibers in the composite material B is 70% by mass. The composite material B has an outer diameter of 14 μm, a length of 1 mm, and an aspect ratio of 71.4. Thus, the aspect ratio of the nanofibers contained in the composite material B is 2500. Further, the content of the polyethylene resin and the content of the nanofibers in the rubber composition of Example 2 are 1.3 parts by mass and 3 parts by mass, respectively, relative to 100 parts by mass of the rubber component.

In the rubber composition of Example 2, the volume fraction of the nanofibers is 1.3% by volume.

<Example 5>

An uncrosslinked rubber composition sheet of Example 5 having the same configurations as the uncrosslinked rubber composition sheet of Example 4, except that the amount of the composite material B was set to be 8.6 parts by mass, relative to 100 parts by mass of the rubber component, was prepared.

The content of the polyethylene resin and the content of the content of the nanofibers in the rubber composition of Example 5 are 2.6 parts by mass and 6 parts by mass, respectively, relative to 100 parts by mass of the rubber component.

In the rubber composition of Example 5, the volume fraction of the nanofibers is 2.5% by volume.

<Example 6>

An uncrosslinked rubber composition sheet of Example 6 having the same configurations as the uncrosslinked rubber composition sheet of Example 4, except that the amount of the composite material B was set to be 13.5 parts by mass, relative to 100 parts by mass of the rubber component, was prepared.

The content of the polyethylene resin and the content of the nanofibers in the rubber composition of Example 6 are 4 parts by mass and 9.5 parts by mass, respectively, relative to 100 parts by mass of the rubber component.

In the rubber composition of Example 6, the volume fraction of the nanofibers is 3.9% by volume.

<Comparative Example 1>

An uncrosslinked rubber composition sheet of Comparative Example 1 having the same configurations as the uncrosslinked rubber composition sheet of Example 1, except that the composite material A was not mixed, was prepared.

<Comparative Example 2>

An uncrosslinked rubber composition sheet of Comparative Example 2 having the same configuration as the uncrosslinked rubber composition sheet of Example 1, except that the composite material A was not mixed and that 25.5 parts by mass of organic short fibers of 6,6-nylon fibers (trade name: CFN3000 produced by Teijin Limited; fiber diameter: 26 $\mu$m, fiber length: 3 mm, aspect ratio: 115) relative to 100 parts by mass of the rubber component were mixed, was prepared.

In the rubber composition of Comparative Example 2, the volume fraction of the organic short fibers is 11.6% by volume.

<Comparative Example 3>

An uncrosslinked rubber composition sheet of Comparative Example 3 having the same configurations as the uncrosslinked rubber composition sheet of Example 1, except that the composite material A was not mixed and that 25.5 parts by mass of organic short fibers of polyethylene terephthalate (PET) fibers (trade name: CFT3000 produced by Teijin Limited; fiber diameter: 16 $\mu$m, fiber length: 3 mm, aspect ratio: 188) relative to 100 parts by mass of the rubber component were mixed, was prepared.

In the rubber composition of Comparative Example 3, the volume fraction of the organic short fibers is 10.0% by volume.

[Table 1]

| | Example | | | | | | Comparative Example | | |
|---|---|---|---|---|---|---|---|---|---|
| | 1 | 2 | 3 | 4 | 5 | 6 | 1 | 2 | 3 |
| EPDM *1 | 100 | 100 | 100 | 100 | 100 | 100 | 100 | 100 | 100 |
| FEF Carbon Black *2 | 65 | 65 | 65 | 65 | 65 | 65 | 65 | 65 | 65 |
| Composite Material A*3 4.3 | 4.3 | 8.6 | 13.5 | | | | | | |
| Thermoplastic Resin (1.3) | (1.3) | (2.6) | (4) | | | | | | |
| Nanofiber (3) | (3) | (6) | (9.5) | | | | | | |
| Composite Material B *4 | | | | 4.3 | 8.6 | 13.5 | | | |
| Thermoplastic Resin | | | | (1.3) | (2.6) | (4) | | | |
| Nanofiber | | | | (3) | (6) | (9.5) | | | |
| 6,6-nylon Short Fiber *5 | | | | | | | | 25.5 | |
| PET Short Fiber *6 | | | | | | | | | 25.5 |
| Process Oil *7 | 10 | 10 | 10 | 10 | 10 | 10 | 10 | 10 | 10 |
| Processing Aid: Stearic Acid *8 | 1 | 1 | 1 | 1 | 1 | 1 | 1 | 1 | 1 |
| Vulcanization Accelerator Aid: Zinc Oxide *9 | 5 | 5 | 5 | 5 | 5 | 5 | 5 | 5 | 5 |
| Antioxidant *10 | 2 | 2 | 2 | 2 | 2 | 2 | 2 | 2 | 2 |
| Crosslinker: Organic Peroxide *11 | 3 | 3 | 3 | 3 | 3 | 3 | 3 | 3 | 3 |
| Co-crosslinker *12 | 2 | 2 | 2 | 2 | 2 | 2 | 2 | 2 | 2 |

(continued)

| | Example | | | | | | Comparative Example | | |
|---|---|---|---|---|---|---|---|---|---|
| | 1 | 2 | 3 | 4 | 5 | 6 | 1 | 2 | 3 |
| Volume Fraction of Fibers (vol %) | 2.2 | 4.5 | 7.0 | 2.2 | 4.5 | 7.0 | 0 | 22.4 | 19.0 |

| |
|---|
| *1: Nordel IP4640, EPDM produced by Dow Chemical Company<br>*2: SEAST SO, FEF produced by Tokai Carbon Co., Ltd.<br>*3: Polyethylene Resin (30% by mass)-PET Nanofiber (Fiber Diameter: 400 nm, Fiber Length: 1 mm) Composite Material (Material Diameter: 14 $\mu$m) produced by Teijin Limited<br>*4: Polyethylene Resin (30% by mass)-PET Nanofiber (Fiber Diameter: 840 nm, Fiber Length: 1 mm) Composite Material (Material Diameter: 28 $\mu$m) produced by Teijin Limited<br>*5: 6,6-nylon Short Fiber (Fiber Diameter: 26 $\mu$m. Fiber Length: 3 mm) produced by Teijin Limited<br>*6: PET Short Fiber (Fiber Diameter: 16 $\mu$m. Fiber Length: 3 mm) produced by Teijin Limited<br>*7: SANPAR 2280 produced by Japan Sun Oil Company<br>*8: Stearic Acid 50S produced by New Japan Chemical Co., Ltd.<br>*9: Zinc Oxide type III produced by Sakai Chemical Industry Co., Ltd.<br>*10: Nocrac MB produced by OUCHI SHINKO CHEMICAL INDUSTRIAL CO., LTD.<br>*11: PERCUMYL D produced by NOF CORPORATION<br>*12: SUN-ESTER TMP produced by SANSHIN CHEMICAL INDUSTRY CO.,LTD. |

(Test Evaluation Method)

A test piece of the rubber composition crosslinked by pressing was prepared for each of Examples 1 to 6 and Comparative Examples 1 to 3, and the following tests were conducted.

<Rubber Hardness Evaluation Test>

The rubber hardness was measured by a type A durometer based on JIS K6253.

<Tension Property Evaluation Test>

Tensile tests in the grain direction and the cross-grain direction were conducted based on JIS K6251. With respect to the tensile in the grain direction, a tensile stress ($M_{10}$) at 10% stretching, a tensile stress ($M_{50}$) at 50% stretching, a tensile strength ($T_B$), and an elongation at breakage ($E_B$) were measured. With respect to the tensile in the cross-grain direction, a tensile stress ($M_{10}$) at 10% stretching, a tensile stress ($M_{50}$) at 50% stretching, a tensile stress ($M_{100}$) at 100% stretching, a tensile strength ($T_B$), and an elongation at breakage ($E_B$) were measured. Further, a ratio of the tensile stress ($M_{10}$) at 10% stretching in the grain direction to the tensile stress ($M_{10}$) at 10% stretching in the cross-grain direction, and a ratio of the tensile stress ($M_{50}$) at 50% stretching in the grain direction to the tensile stress ($M_{50}$) at 50% stretching in the cross-grain direction were obtained.

<Dynamic Viscoelastic Property Evaluation Test>

Based on JIS K6394, a storage elastic modulus (E') and a loss factor (tan$\delta$) in the grain direction were measured by a pulling method under conditions of a mean strain which is a strain under a load 1.3 times greater than a load at a strain of 1%, a strain amplitude of 0.1%, a frequency of 10 Hz, and a test temperature of 100°C. A storage elastic modulus (E') and a loss factor (tan$\delta$) in the cross-grain direction were measured by a pulling method under conditions of a mean strain of 5%, a strain amplitude of 1%, a frequency of 10 Hz, and a test temperature of 100°C. Further, a ratio of the storage elastic modulus (E') in the grain direction to the storage elastic modulus (E') in the cross-grain direction was obtained. A viscoelastic testing machine manufactured by RHEOLOGY was used for the measurement.

<Evaluation Test for Wear Resistance Property and Friction Coefficient>

A pin-on-disc friction and wear testing machine was used to measure a wear volume of a test piece, which is a cube of 5 mm per side. A plane of this test piece orthogonal to the grain direction was used as a sliding surface, which was brought into contact with a surface of a disc-shaped counterpart member made of S45C whose temperature had been controlled to 100°C such that its sliding direction was orthogonal to the grain direction and the cross-grain direction. A load of 19.6 N was applied to the test piece from above, and the counterpart member was rotated at 80 rpm (sliding velocity: 15.072 m/min) to measure the wear volume after 24 hours. This test was conducted twice, and the average was taken as data of the wear volume.

Also, a plane of a test piece, which is a cube of 5 mm per side, orthogonal to the grain direction was used as a sliding surface, which was brought into contact with a surface of a disc-shaped counterpart member made of S45C whose temperature had been controlled to a room temperature (23°C) such that its sliding direction was orthogonal to the grain direction and the cross-grain direction. A load of 19.6 N was applied to the test piece from above, and the counterpart member was rotated at 80 rpm (sliding velocity: 15.072 m/min) to measure the friction coefficient.

<Flex-Fatigue Resistance Evaluation Test>

A test piece extending in the cross-grain direction was repeatedly bent, using a De-Mattia flex tester, with a stroke of 20 mm and 300 bends per minute, and the number of bends until the test piece was broken was measured. The trial was conducted twice, and the average was taken as data of the number of bends until the test piece was broken.

<Surface Roughness of Cut Face>

A test piece was obtained by cutting a sheet having a thickness of 2 mm in a direction orthogonal to the grain direction, using a high-speed cutter. Surface roughness measuring machines (Form Tracer SV-C4100 and Surf Tester SV3000 produced by Mitutoyo Corporation) were used to measure a maximum height roughness (Ry) of the cut face of the test piece, under conditions of cutoff values of $\lambda c = 0.8$ mm and $\lambda s = 2.5$ $\mu$m, and a scanning speed of 0.5 mm/sec and a scanning length of 8 mm.

(Test Evaluation Results)

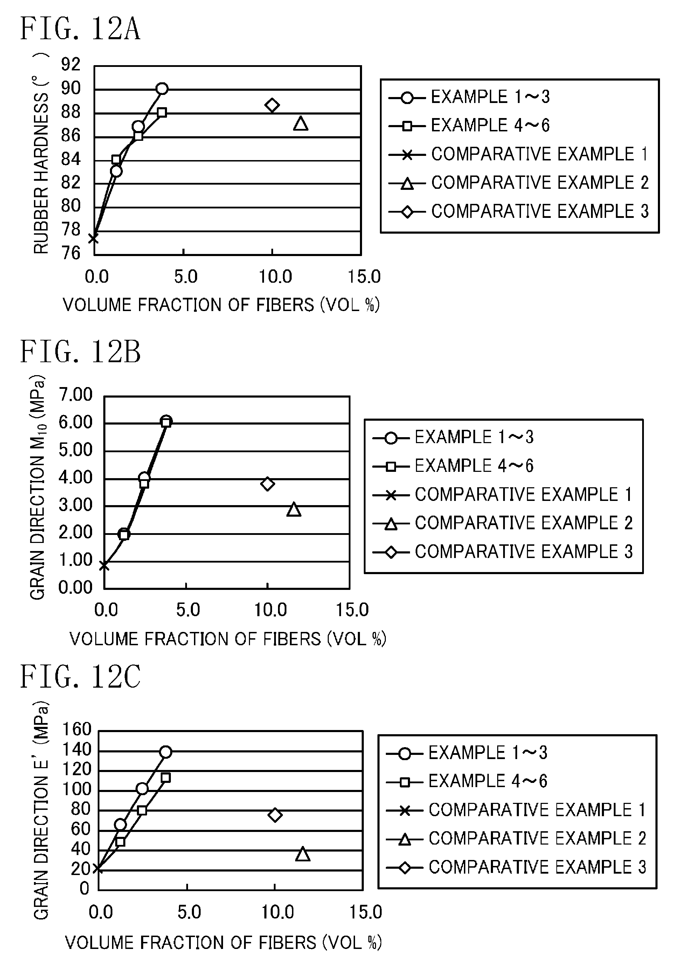

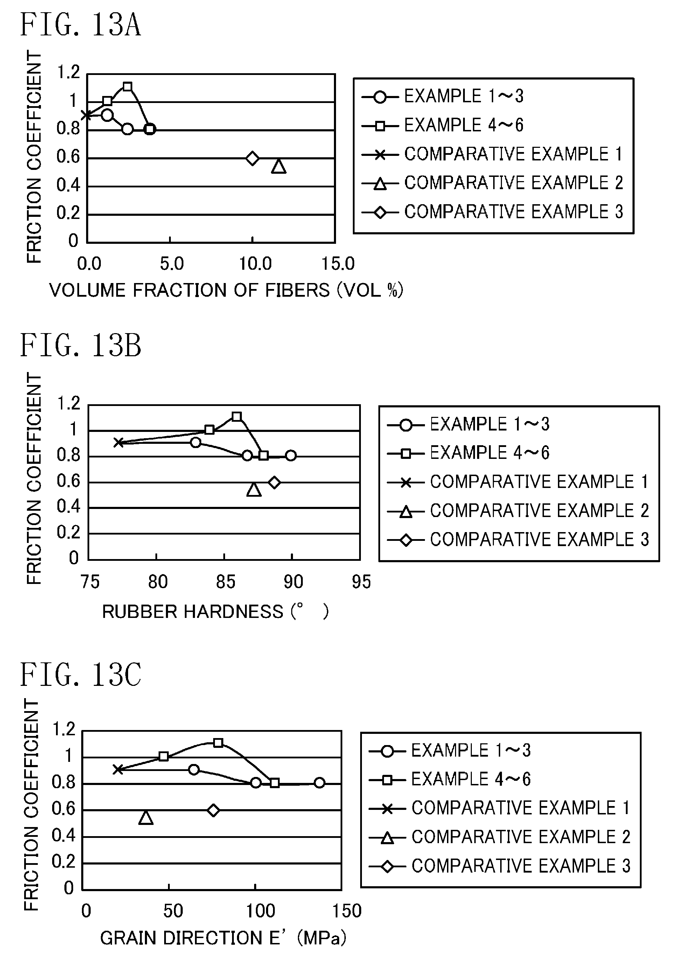

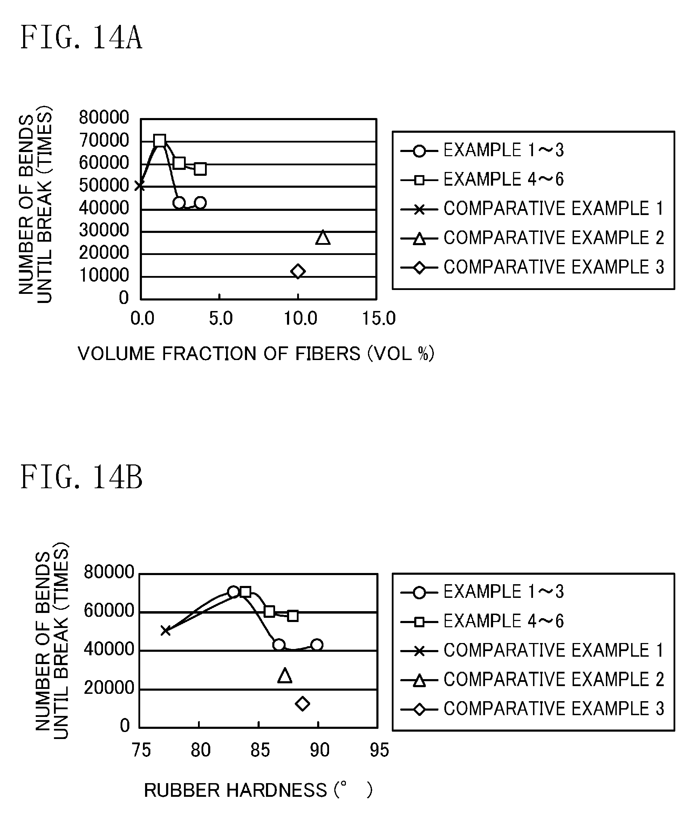

Table 2 shows the test results. FIGS. 12A to 12C respectively show a relationship between a volume fraction of the fibers and the hardness of the rubber, a relationship between a volume fraction of the fibers and the tensile stress ($M_{10}$) at 10% stretching in the grain direction, and a relationship between a volume fraction of the fibers and a storage elastic modulus (E') in the grain direction. FIGS. 13A to 13C respectively show a relationship between a volume fraction of the fibers and a friction coefficient, a relationship between the hardness of the rubber and a friction coefficient, and a relationship between a storage elastic modulus (E') in the grain direction and a friction coefficient. FIGS. 14A and 14B respectively show a relationship between a volume fraction of the fibers and the number of bends until the belt is broken in the flex-fatigue resistance evaluation test, and a relationship between the hardness of the rubber and the number of bends until the belt is broken in the flex-fatigue resistance evaluation test.

[Table 2]

| | | | Example | | | | | | Comparative Example | | |
|---|---|---|---|---|---|---|---|---|---|---|---|
| | | | 1 | 2 | 3 | 4 | 5 | 6 | 1 | 2 | 3 |
| Rubber Hardness (°) | | | 83 | 87 | 90 | 84 | 86 | 88 | 77 | 87 | 89 |
| Tension Property | Grain Direction | Tensile Stress $M_{10}$ (MPa) at 10% Stretching | 1.96 | 4.00 | 6.05 | 1.92 | 3.78 | 6.00 | 0.85 | 2.90 | 3.82 |
| | | Tensile Stress $M_{50}$ (MPa) at 50% Stretching | 5.00 | 6.62 | 8.27 | 4.95 | 6.70 | 8.45 | 2.45 | 6.09 | 4.78 |
| | | Tensile Strength $T_B$ (MPa) | 16.60 | 15.10 | 14.80 | 17.10 | 15.90 | 14.40 | 18.60 | 13.10 | 14.30 |
| | | Elongation at Breakage $E_B$ (%) | 241 | 207 | 211 | 270 | 222 | 201 | 303 | 272 | 248 |
| | Cross-grain Direction | Tensile Stress $M_{10}$ (MPa) at 10% Stretching | 0.84 | 1.01 | 1.23 | 0.88 | 1.03 | 1.14 | 0.79 | 1.15 | 1.15 |
| | | Tensile Stress $M_{50}$ (MPa) at 50% Stretching | 2.34 | 2.62 | 3.09 | 2.44 | 2.62 | 2.89 | 2.20 | 2.85 | 2.43 |
| | | Tensile Stress $M_{100}$ (MPa) at 100% Stretching | 4.14 | 4.33 | 4.81 | 4.32 | 4.32 | 4.64 | 3.89 | 4.29 | 3.20 |
| | | Tensile Strength $T_B$ (MPa) | 15.90 | 14.00 | 12.30 | 16.10 | 14.40 | 13.00 | 17.90 | 10.40 | 10.60 |
| | | Elongation at Breakage $E_B$ (%) | 280 | 275 | 220 | 277 | 271 | 203 | 320 | 255 | 227 |
| | Grain Direction $M_{10}$/Cross-grain Direction $M_{10}$ | | 2.33 | 3.96 | 4.92 | 2.18 | 3.67 | 5.26 | 1.08 | 2.52 | 3.32 |
| | Grain Direction $M_{50}$/Cross-grain Direction $M_{50}$ | | 2.14 | 2.53 | 2.68 | 2.03 | 2.56 | 2.92 | 1.11 | 2.14 | 1.97 |
| Dynamic Viscoelastic Property | Grain Direction | Storage Elastic Modulus E' (MPa) | 65.1 | 101 | 138 | 47.5 | 79.2 | 112 | 21.1 | 36.8 | 75.7 |
| | | Loss Factor tanδ | 0.056 | 0.0053 | 0.0051 | 0.065 | 0.072 | 0.054 | 0.090 | 0.080 | 0.076 |
| | Cross-grain Direction | Storage Elastic Modulus E' (MPa) | 15.9 | 16.8 | 20.4 | 15.7 | 16.2 | 19.0 | 12.0 | 15.2 | 16.5 |
| | | Loss Factor tanδ | 0.153 | 0.146 | 0.147 | 0.149 | 0.152 | 0.155 | 0.150 | 0.152 | 0.151 |
| | Grain Direction E'/Cross-grain Direction E' | | 4.09 | 6.01 | 6.76 | 3.03 | 4.89 | 5.89 | 1.76 | 2.42 | 4.59 |
| Wear Resistance Property Wear Loss Wear Volume (cm$^3$) | | | 0.0036 | 0.0032 | 0.0021 | 0.0034 | 0.0032 | 0.0022 | 0.0125 | 0.0023 | 0.0023 |
| Friction Coefficient | | | 0.90 | 0.80 | 0.80 | 1.0 | 1.1 | 0.80 | 0.90 | 0.55 | 0.60 |
| Flex-Fatigue Resistance Number of Bends Until Break (times) | | | 70000 | 42500 | 42500 | 70000 | 60000 | 57500 | 50000 | 27500 | 12500 |
| Surface Roughness Ry (μm) of Cut Face | | | 1.5 | 1.3 | 1.6 | 1.2 | 1.1 | 1.4 | 2.0 | 13 | 8.0 |

FIGS. 12A to 12C show that Examples 1 to 6 mixed with the composite material A or the composite material B containing nanofibers can achieve a higher rubber hardness and a higher degree of elasticity with a smaller volume fraction of the nanofibers, compared to Comparative Examples 2 and 3 in which organic short fibers are mixed. In particular, the same level of the tensile stress ($M_{10}$) at 10% stretching in the grain direction and the same level of the storage elastic modulus (E') in the grain direction which can be achieved when the volume fraction of the organic short fibers is 11.6% by volume (Comparative Example 2) or 10.0% by volume (Comparative Example 3), can be achieved when the volume fraction of the nanofibers is 1 to 3% by volume. This may be because of the nanofibers which each have very small fiber diameter, and hence a greater aspect ratio. Note that Examples 1 to 3 mixed with the composite material A containing nanofibers whose fiber diameter is 840 nm, and Examples 4 to 6 mixed with the composite material B containing nanofibers whose fiber diameter is 840 nm, do not show much difference.

FIGS. 13A to 13C show that Examples 1 to 6 mixed with the composite material A or the composite material B containing nanofibers exhibit higher friction coefficients, compared to Comparative Examples 2 and 3 in which organic short fibers are mixed, in the case of the same level of rubber hardness and the same level of degree of elasticity ($M_{10}$, E'). Note that Comparative Example 1 in which neither nanofibers nor organic short fibers are mixed, exhibits a high friction coefficient, but the rubber hardness and the degree of elasticity ($M_{10}$, E') are low, and hence, the sheet of Comparative Example 1 is not suitable as the inner rubber layer of the flat belt.

FIG. 14A shows that Examples 1 to 6 mixed with the composite material A or the composite material B containing nanofibers exhibit the same or greater level of flex-fatigue resistances, compared to Comparative Example 1 in which either nanofibers or organic short fibers are not mixed, whereas Comparative Examples 2 and 3 in which organic short fibers are mixed, exhibit significantly poor flex-fatigue resistances, compared even to Comparative Example 1. Further, FIG. 14B shows that Examples 1 to 6 mixed with the composite material A or the composite material B containing nanofibers exhibit high rubber hardness and high flex-fatigue resistances, as well.

[Second Test Evaluation]

(Flat Belt)

Flat belts each configured to have the inner rubber layer of which the grain direction is the belt width direction were formed by the same or similar method as in the above embodiment, using the rubber compositions of Examples 2 and 5 and Comparative Examples 1 to 3.

The second test evaluation was intended for a test evaluation of the inner rubber layer. Thus, so as not to fail the objective, the cord retaining layer and the outer rubber layer were each made of a rubber composition of which the rubber hardness was high. Specifically, as shown in Table 3, the cord retaining layer and the outer rubber layer were each made of a rubber composition of which a rubber component was EPDM (trade name: Nordel IP 4640 produced by the Dow Chemical Company), and into which 65 parts by mass of carbon black (trade name: SEAST SO, FEF produced by Tokai Carbon Co., Ltd.), 10 parts by mass of process oil (trade name: SUNPAR 2280 produced by Japan Sun Oil Company, Ltd.), 1 part by mass of a stearic acid as a processing aid (trade name: stearic acid 50S produced by New Japan Chemical Co., Ltd.), 5 parts by mass of a zinc oxide as a vulcanization accelerator aid (trade name: zinc oxide type III produced by Sakai Chemical Industry Co., Ltd.), 2 parts by mass of an antioxidant (trade name: Nocrac MB produced by OUCHI SHINKO CHEMICAL INDUSTRIAL CO., LTD.), 3 parts by mass of an organic peroxide as a crosslinker (trade name: PERCUMYL D (a dicumyl peroxide) produced by NOF CORPORATION), 2 parts by mass of ethylene glycol dimethacrylate as a co-crosslinker (trade name: SUN-ESTER EG produced by SANSHIN CHEMICAL INDUSTRY CO.,LTD.), and 25 parts by mass of para-aramid short fibers (Technora short-cut fiber CHF3050 produced by Teijin Limited; fiber diameter: 12.3 $\mu$m, fiber length: 3 mm), relative to 100 parts by mass of the rubber component, were mixed. The rubber hardness of the rubber compositions forming the cord retaining layer and the outer rubber layer which was measured by a type A durometer, based on JIS K6253, was 94°.

[Table 3]

| EPDM | 100 |
|---|---|
| FEF Carbon Black | 65 |
| Process Oil | 15 |
| Processing Aid: Stearic Acid | 0.5 |
| Vulcanization Accelerator Aid: Zinc Oxide | 5 |
| Antioxidant | 2 |

(continued)

| Crosslinker: Organic Peroxide | 3 |
|---|---|
| Co-crosslinker | 2 |
| Para-aramid Short Fibers *13 | 25 |
| *13: Technora short-cut fiber CHF3050 produced by Teijin Limited (Fiber Diameter: 12.3 μm, Fiber Length: 3 mm) ||

Further, twisted yarn in which the outer diameter of aramid fibers was 0.7 mm was used as the cord. The flat belt was designed to have a length of 1000 mm, a width of 20 mm, and a thickness of 3 mm (with the inner rubber layer having a thickness of 0.8 mm).

(Test Evaluation Method)

<Apparent Friction Coefficient μ' of Belt Inner Peripheral Surface>

A flat belt piece 21 having a length of 250 mm was cut out of each of the flat belts. This flat belt piece 21 was wrapped, at a wrapping angle of 90°, around a flat pulley 22 having an outer diameter of 75 mm, as illustrated in FIG. 2. The upper end of the flat belt piece 21 was chucked to connect it to a load cell 23, while the lower end thereof hanging down vertically was chucked to attach a weight 24 thereto. The flat pulley 22 was rotated at a peripheral speed of 20 m/s to increase the tension of the flat belt piece 21 at a portion between the load cell 23 and the flat pulley 22. Loose-side tension $T_s$ (i.e., 19.6 N) applied by the weight 24 and tension-applied-side tension $T_t$ detected by the load cell 23 were used to obtain the apparent friction coefficient μ' of the belt inner peripheral surface, based on the Euler equation (1) shown above.

<Belt Running Test>

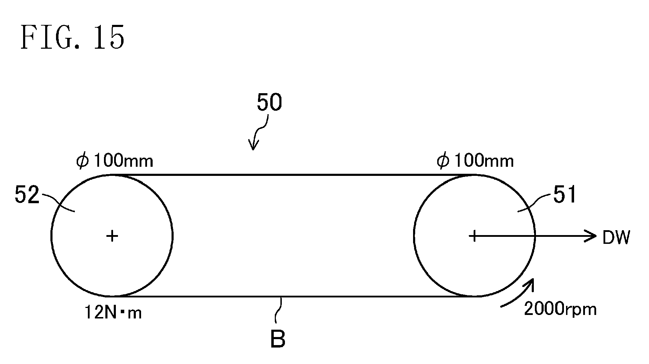

FIG. 15 illustrates a belt running tester 50.

The belt running tester 50 includes a drive pulley 51, which is a flat pulley having an outer diameter of 100 mm, and a driven pulley 52, which is a flat pulley located on the left side of the drive pulley 51 and having an outer diameter of 100 mm. The drive pulley 51 is movable in a lateral direction so that it can apply a dead weight DW to the flat belt B.

Each of the flat belts B was wrapped around the drive pulley 51 and the driven pulley 52 of the belt running tester 50. The drive pulley 51 was moved rightward to apply an axial load (the dead weight DW) of 300 N to the drive pulley 51, thereby applying tension to the belt B, and the drive pulley 51 was rotated at 2000 rpm at an ambient temperature of 100°C, with rotating torque of 12N·m being applied to the driven pulley 52. Then, the running time of the flat belt B until it slipped was measured. Similarly, cases where the axial load was 400 N and 500 N were tested, too. Note that the belt running was stopped at the moment when the belt did not slip even after 300 hours of running with the axial load of 400 N, and when the belt did not slip even after 500 hours of running with the axial load of 500 N.

In the case where the axial load was 500 N, the belt running was once stopped at the moment when 20 hours had passed since the start of the belt running to check the wear condition of the surface-side inner rubber layer. The case in which the thickness change was 30 μm or less and almost no wear was found was evaluated as "A." The case in which the thickness change was greater than 30 μm and 80 μm or less and the belt was worn only a little was evaluated as "B." The case in which the thickness change was greater than 80 μm was evaluated as "C."

(Test Evaluation Results)

Table 4 shows the test evaluation results.

[Table 4]

|  |  | Example || Comparative Example |||
|---|---|---|---|---|---|---|
|  |  | 2 | 5 | 1 | 2 | 3 |
| Apparent Friction Coefficient μ' || 0.85 | 0.91 | 0.82 | 0.55 | 0.60 |
| Axial Load 300 N | Running Time Until Slip Occurs (hours) | 15 | 80 | 0 | 0 | 0 |
| Axial Load 400 N | Running Time Until Slip Occurs (hours) | >300 | >300 | 260 | 10 | 60 |

(continued)

| | | Example | | Comparative Example | | |
| --- | --- | --- | --- | --- | --- | --- |
| | | 2 | 5 | 1 | 2 | 3 |
| Axial Load 500 N | Running Time Until Slip Occurs (hours) | >500 | >500 | - | 200 | 230 |
| | Wear Condition After 20-Hour Running | A | A | C | A | A |

The apparent friction coefficient μ' of the belt inner peripheral surface was 0.85 in Example 2, 0.91 in Example 5, 0.82 in Comparative Example 1, 0.55 in Comparative Example 2, and 0.60 in Comparative Example 3.

In the case where the axial load was 300 N, the running time of the belt until it slipped was 15 hours in Example 2, 80 hours in Example 5, and right after the running of the belt in Comparative Examples 1 to 3. In the case where the axial load was 400 N, the belt did not slip even after 300 hours in both of Examples 2 and 5, whereas the running time of the belt until it slipped was 260 hours in Comparative Example 1, 10 hours in Comparative Example 2, and 60 hours in Comparative Example 3. In the case where the axial load was 500 N, the belt did not slip even after 500 hours in both of Examples 2 and 5, whereas in Comparative Example 1 the test was stopped after 20 hours since the belt was worn significantly, and the running time of the belt until it slipped was 200 hours in Comparative Example 2 and 230 hours in Comparative Example 3.

The wear condition after 20-hour running of the belt in the case where the axial load was 500 N was "A" in Example 2, "A" in Example 5, "C" in Comparative Example 1, "A" in Comparative Example 2, and "A" in Comparative Example 3.

The above results show that the flat belts having the inner rubber layers made of the rubber compositions of Example 2 and 5 mixed with the composite material A or the composite material B containing nanofibers, can transmit power for a long period of time with a small axial load applied thereto, and that no slip occurs if an appropriate axial load is applied. Thus, setting the axial load at an appropriate level may provide a maintenance-free power transmission system. Further, the small axial load allows the flat belt to be used with low tension, and can reduce hysteresis loss caused by the deformation during power transmission. This allows for power transmission with low energy consumption. Moreover, these flat belts are worn only a little, superior in durability, and thus less likely to cause a problem such as deterioration of the environment with wear debris.

INDUSTRIAL APPLICABILITY

The present invention is useful for a flat belt and a method for manufacturing the flat belt.

DESCRIPTION OF REFERENCE CHARACTERS

B          Flat Belt
B'         Belt Formation Body
10         Flat Belt Body
11         Inner Rubber Layer
11',12',13'  Uncrosslinked Rubber Composition Sheet
12         Cord Retaining Layer
13         Outer Rubber Layer
14         Cord
14'        Cord Material
15         Single Rubber Layer
16         Nanofiber
17         Reinforcing Fabric
21         Flat Belt Piece
22,31,32,33  Flat Pulley
23         Load Cell
24         Weight
30         Belt Transmission System
41         Cylindrical Mold
42         Rubber Sleeve

| 50 | Belt Running Tester |
| 51 | Drive Pulley |
| 52 | Driven Pulley |

**Claims**

1. A flat belt of which a portion serving as a belt inner peripheral surface is made of a rubber composition, wherein the rubber composition contains nanofibers of an organic fiber having a fiber diameter of 300 to 1000 nm.

2. The flat belt of claim 1, wherein the nanofibers are oriented in a belt width direction.

3. The flat belt of claim 1 or 2, wherein the nanofibers have a fiber length of 0.3 to 5 $\mu$m, and a ratio of the fiber length to the fiber diameter is 500 to 10000.

4. The flat belt of any one of claims 1-3, wherein the nanofibers are of polyethylene terephthalate fibers.

5. The flat belt of any one of claims 1-4, wherein 1 to 20 parts by mass of the nanofibers, relative to 100 parts by mass of a rubber component, are contained in the rubber composition.

6. The flat belt of any one of claims 1-5, wherein a volume fraction of the nanofibers in the rubber composition is 1 to 15% by volume.

7. The flat belt of any one of claims 1-6, wherein the rubber composition does not contain an organic short fiber having a fiber diameter of 10 $\mu$m or more.

8. The flat belt of any one of claims 1-7, wherein the rubber composition is mixed with a reinforcing agent, and 30 to 80 parts by mass of the reinforcing agent, relative to 100 parts by mass of the rubber component, are contained in the rubber composition.

9. The flat belt of any one of claims 1-8, wherein an apparent friction coefficient of the belt inner peripheral surface is 0.70 or more.

10. A method of manufacturing the flat belt of any one of claims 1-9, the method comprising:

    a rubber composition formation step of forming an uncrosslinked rubber composition used to form the portion serving as the belt inner peripheral surface, by kneading a rubber component and a composite material which has a sea-island structure comprised of a sea of a thermoplastic resin and a large number of islands which are a bundle of nanofibers of an organic fiber having a fiber diameter of 300 to 1000 nm, at a temperature higher or equal to a melting point or a softening temperature of the thermoplastic resin of the composite material.

11. The method of claim 10, wherein the composite material is a conjugate fiber cut into a rod shape, and the conjugate fiber is comprised of the nanofibers arranged independently from, and in parallel with, one another, like islands in the sea of a polymer of the thermoplastic resin.

12. The method of claim 10 or 11, wherein the rubber component is an ethylene-$\alpha$-olefin elastomer, and the thermoplastic resin of the composite material is a polyethylene resin.

FIG. 1

FIG. 2

FIG. 3

30

31

33

32

B

FIG. 4

M

16    R

FIG. 5A

FIG. 5B

FIG. 5C

FIG. 6

FIG. 7

FIG. 8

FIG. 9A

FIG. 9B

FIG. 9C

FIG. 10A

FIG. 10B

FIG. 10C

FIG. 11A

FIG. 11B

## FIG. 12A

- —O— EXAMPLE 1～3
- —□— EXAMPLE 4～6
- —✕— COMPARATIVE EXAMPLE 1
- —△— COMPARATIVE EXAMPLE 2
- —◇— COMPARATIVE EXAMPLE 3

RUBBER HARDNESS (°) vs VOLUME FRACTION OF FIBERS (VOL %)

## FIG. 12B

- —O— EXAMPLE 1～3
- —□— EXAMPLE 4～6
- —✕— COMPARATIVE EXAMPLE 1
- —△— COMPARATIVE EXAMPLE 2
- —◇— COMPARATIVE EXAMPLE 3

GRAIN DIRECTION $M_{10}$ (MPa) vs VOLUME FRACTION OF FIBERS (VOL %)

## FIG. 12C

- —O— EXAMPLE 1～3
- —□— EXAMPLE 4～6
- —✕— COMPARATIVE EXAMPLE 1
- —△— COMPARATIVE EXAMPLE 2
- —◇— COMPARATIVE EXAMPLE 3

GRAIN DIRECTION E' (MPa) vs VOLUME FRACTION OF FIBERS (VOL %)

FIG. 13A

FIG. 13B

FIG. 13C

FIG. 14A

FIG. 14B

FIG. 15

## INTERNATIONAL SEARCH REPORT

| International application No. |
| --- |
| PCT/JP2014/004124 |

**A. CLASSIFICATION OF SUBJECT MATTER**
*F16G1/00*(2006.01)i, *B29D29/00*(2006.01)i, *F16G1/08*(2006.01)i

According to International Patent Classification (IPC) or to both national classification and IPC

**B. FIELDS SEARCHED**

Minimum documentation searched (classification system followed by classification symbols)
F16G1/00, B29D29/00, F16G1/08

Documentation searched other than minimum documentation to the extent that such documents are included in the fields searched

| | | | | |
| --- | --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2002-194144 A (Mitsuboshi Belting Ltd.),<br>10 July 2002 (10.07.2002),<br>paragraphs [0023] to [0034]; fig. 1 to 3<br>(Family: none) | 1<br>2-9<br>10-12 |
| Y | JP 2012-215212 A (Gates Unitta Asia Co.),<br>08 November 2012 (08.11.2012),<br>paragraphs [0023] to [0048]; fig. 1 to 2<br>& US 2014/0066244 A1 & EP 2693078 A1<br>& WO 2012/132537 A1 & CA 2831267 A1<br>& KR 10-2013-0138735 A & CN 103403390 A | 2-9 |

| ☒ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 October, 2014 (20.10.14) | 28 October, 2014 (28.10.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2014/004124 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2009-030728 A  (Bando Chemical Industries, Ltd.), 12 February 2009 (12.02.2009), paragraph [0037] & US 2010/0203994 A1    & EP 2175163 A1 & WO 2009/016797 A1    & KR 10-2010-0058464 A & CN 101802441 A | 4-9 |
| A | JP 2011-064257 A  (Bando Chemical Industries, Ltd.), 31 March 2011 (31.03.2011), entire text; fig. 1 to 6 (Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012207220 A
- JP 2012077223 A
- JP 3680083 B